Europäisches Patentamt

European Patent Office

Office européen des brevets

(11) Veröffentlichungsnummer: **0 319 772**
**A2**

## (12) EUROPÄISCHE PATENTANMELDUNG

(21) Anmeldenummer: 88119462.5

(22) Anmeldetag: 23.11.88

(51) Int. Cl.⁴: **B29C 67/18 , B32B 31/20**

(30) Priorität: 08.12.87 DE 3741587

(43) Veröffentlichungstag der Anmeldung:
14.06.89 Patentblatt 89/24

(84) Benannte Vertragsstaaten:
AT BE CH DE ES FR GB GR IT LI LU NL SE

(71) Anmelder: **Louda, Günther**
**Dr.-Kurt-Huber-Strasse 10**
**D-8022 Grünwald(DE)**

(72) Erfinder: **Louda, Günther**
**Dr.-Kurt-Huber-Strasse 10**
**D-8022 Grünwald(DE)**

(74) Vertreter: **Lamprecht, Helmut, Dipl.-Ing.**
**Corneliusstrasse 42**
**D-8000 München 5(DE)**

(54) **Verfahren zum Laminieren von blatt- oder kartenförmigen Inletts.**

(57) Beim Laminieren von blatt- oder kartenförmigen
Inletts zwischen einer oberen und einer unteren Hüllfolie, bei welchem die Inletts ein Andrückwalzenpaar
(22, 24) durchlaufen und eine obere und eine untere
Hüllfolienbahn zwischen die Andrückwalzen, an diesen anliegend eingeführt wird, wird die aus den
aneinander anliegenden und zwischen sich die Inletts einschließenden Hüllfolien gebildete Bahn nach
dem Durchlaufen der Andrückwalzen durch eine
Temperstrecke (34) geführt, in welcher diese Bahn
einer Wärmeeinwirkung ausgesetzt wird. Anschließend wird die Bahn durch eine weiteres Andrückwalzenpaar (30, 32) und anschließend durch eine Kühlstrecke (36) geführt, bevor in einer Schneidstation
(44) die laminierten Inletts aus der Bahn getrennt
werden.

Fig. 1

## Verfahren zum Laminieren von blatt- oder kartenförmigen Inletts.

Die Erfindung betrifft ein Verfahren zum Laminieren von blatt- oder kartenförmigen Inletts zwischen einer oberen und einer unteren Hüllfolie, bei welchem die Inletts ein beheiztes Andrückwalzenpaar durchlaufen und eine obere und eine untere Hüllfolienbahn zwischen die Andrückwalzen, an diesen anliegend, eingeführt wird.

Bei Hochleistungsanlagen mit raschem Materialdurchsatz ist der Kontakt der Hüllfolienbahnen mit den Walzen des ersten Andrückwalzenpaares so kurz, daß eine sichere Verbindung der Hüllfolien mit dem Inlett nicht gewährleistet ist.

Der Erfindung liegt deshalb die Aufgabe zugrunde, ein Verfahren der eingangs genannten Art so auszubilden, daß es sich auch für hohe Verarbeitungsgeschwindigkeiten eignet und eine stets zuverlässige Verbindung der Hüllfolien mit dem Inlett gewährleistet, wie dies insbesondere bei Ausweiskarten und ähnlichen Datenträgern im Interesse der Fälschungssicherheit erfor derlich ist. Dabei soll andererseits erreicht werden, daß nach der sicheren Verbindung der Hüllfolien mit dem Inlett während der weiteren, mit hoher Geschwindigkeit erfolgenden Verarbeitung keine Verformung eintreten kann.

Zur Lösung der gestellten Aufgabe wird das eingangs genannte Verfahren derart ausgestaltet, daß die aus den aneinander anliegenden und zwischen sich die Inlets einschließenden Hüllfolienbahnen gebildete Bahn nach dem Durchlaufen der Andrückwalzen eine Temperstrecke durchläuft, in welcher diese Bahn einer Wärmeeinwirkung ausgesetzt wird, daß die Bahn anschliessend durch ein weiteres Andrückwalzenpaar und anschließend durch eine Kühlstrecke geführt wird, bevor in einer Schneidstation die laminierten Inletts aus der Bahn getrennt werden.

Da die Länge der Temperstrecke entsprechend der vorgesehenen Arbeitsgeschwindigkeit so gewählt werden kann, daß stets eine ausreichende Wärmeeinwirkung auf das zu verarbeitende Material stattfindet, ist eine zuverlässige Verbindung zwischen den Hüllfolien und dem Inlett sichergestellt. Durch die gegenüber der bisherigen Verfahrensweise höhere Wärmeaufnahme des zu verarbeitenden Materials besteht die Gefahr, daß bei der nachfolgenden Weiterverarbeitung die Temperatur noch über dem wünschenswerten Maß liegt und dadurch Verformungen eintreten können. Um dieser Gefahr zu begegnen, wird das Material nach dem Verlassen des zweiten Andrückwalzenpaars durch eine Kühlstrecke geführt, bevor eine weitere Verarbeitung stattfindet.

Eine zur Durchführung des Verfahrens dienende Vorrichtung mit einem ersten beheizten Andrückwalzenpaar ist erfindungsgemäß so ausgestaltet, daß in der Transportbahn des zu behandelnden Materials auf das erste Andrückwalzenpaar eine mit einer Heizeinrichtung versehene Temperstrecke und auf diese ein zweites Andrückwalzenpaar folgt, und daß dem zweiten Andrückwalzenpaar eine Kühlstrecke nachgeschaltet ist.

Vorzugsweise besteht die Kühlstrecke aus einem die Transportbahn umschließenden, mit einer Kühlluftzufuhr versehenen Gehäuse. Zur Verstärkung der Kühlwirkung enthält das Gehäuse nach einer zweckmäßigen Ausgestaltung von der Kühlluft bestrichene Kühlwalzen, die die Transportbahn tangieren. Durch den körperlichen Kontakt der Kühlwalzen mit dem zu kühlenden Material verstärkt sich die Kühlwirkung.

Nach einer weiteren zweckmäßigen Ausbildung sind die Kühlwalzen lose drehbar gelagert.

Noch eine andere vorteilhafte Ausgestaltung besteht darin, daß die Kühlwalzen beiderseits der Transportbahn in zwei Gruppen angeordnet sind.

Eine besonders vorteilhafte Ausgestaltung besteht darin, daß das Gehäuse die Kühlwalzen auf der von der Transportbahn abgewandten Seite einzeln haubenartig umschließt, wodurch der Luftstrom in einem relativ engen Querschnitt zwischen Walzenoberfläche und Gehäuse geführt und dadurch die Wärmeübertragung von den Kühlwalzen auf den Luftstrom und somit die Kühlwirkung verbessert wird.

Um bei der hohen Arbeitsgeschwindigkeit sicherzustellen, daß die Hüllfolien einen sicheren Geradelauf in Bezug auf die Andrückwalzen erhalten und glatt anliegen, besteht eine weitere zweckmäßige Ausgestaltung darin, daß dem ersten Andrückwalzenpaar Vorwärmein richtungen für die Hüllfolienbahnen vorgeschaltet sind.

Anhand der nun folgenden Beschreibung eines in der Zeichnung dargestellten Ausführungsbeispiels der erfindungsgemäßen Vorrichtung wird die Erfindung näher erläutert.

Es zeigt:

Fig. 1 eine schematische Seitenansicht der erfindungsgemäßen Vorrichtung und

Fig. 2 eine schematische Schnittansicht der Kühlstation.

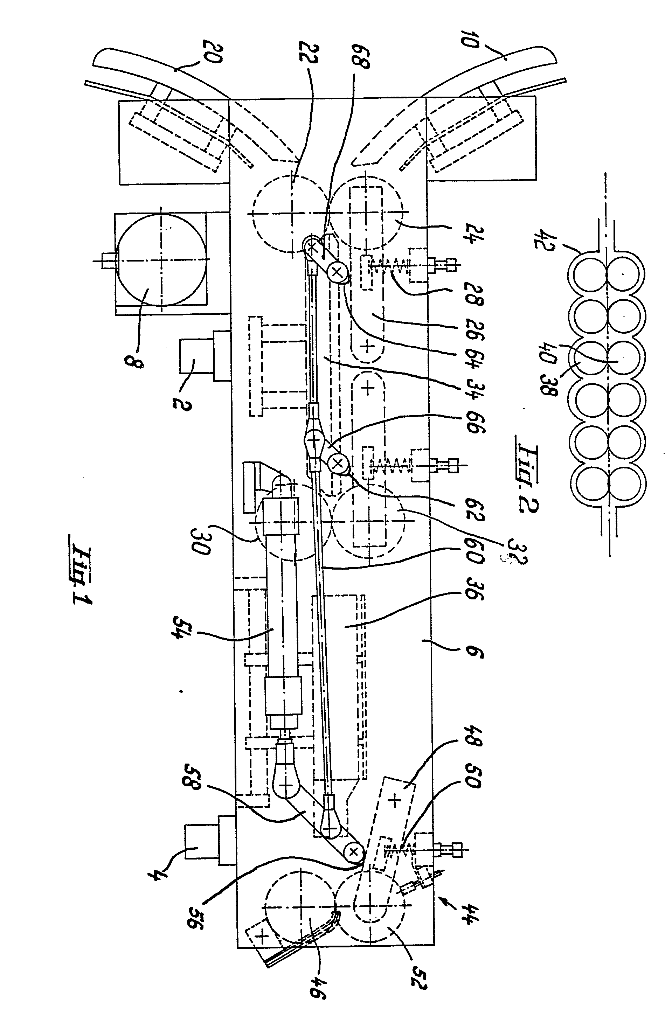

Die Figur 1 zeigt die Laminier- und Schneidstation einer Anlage zur Herstellung von Ausweiskarten, die einen von Konsolen 2 und 4 getragenen Rahmen 6 aufweist. Zum Antrieb dient ein Schrittmotor 8. Die Ausweiskarten durchlaufen die Anlage in der Figur von links nach rechts.

Von nicht dargestellten Vorratsrollen für das zum Laminieren verwendete Folienmaterial werden eine obere und eine untere Hüllfolienbahn über eine obere Führung 10 und eine untere Führung 20 einem Andrückwalzenpaar 22 und 24 zugeführt, wobei die Folienbahnen an den Walzen 22 und 24 anliegen und zwischen sie durch eine nicht gezeigte Vorschubeinrichtung schrittweise mit exaktem Abstand die Inletts eingeschoben werden. Die Führungen 10 und 20 sind mit Vorwärmeinrichtungen für die Hüllfolienbahnen versehen.

Die untere Andrückwalze 22 ist fest gelagert, die obere Andrückwalze 24 ist an einem Schwenkarm 26 gelagert und wird durch eine Feder 28 gegen die untere Andrückwalze 22 gedrückt.

Mit einem der beabsichtigten Wärmeeinwirkung entsprechenden Abstand folgt auf das erste Andrückwalzenpaar 22 und 24 ein zweites Andrückwalzenpaar 30 und 32. Zwischen beiden Walzenpaaren 22 und 24 einerseits und 30 und 32 andererseits befindet sich eine Temperstrecke, die durch eine Heizeinrichtung 34 schematisch dargestellt ist. Da bei einer mit hohem Ausstoß arbeitenden Anlage die Wärmeeinwirkung im Bereich des ersten Andrückwalzenpaares 22 und 24 nur relativ kurz ist, wird durch die Erwärmung in der Temperstrecke und die anschließende Einwirkung des zweiten Andrückwalzenpaares 30 und 32 die Verbindung zwischen den Inletts und den Hüllfolien wesentlich verbessert.

Damit bei der weiteren Verarbeitung keine Verformung eintreten kann, wird die die Anlage durchlaufende Bahn nachfolgend auf das zweite Andrückwalzenpaar 30 und 32 durch eine Kühlstrecke 36 geführt.

Diese Kühlstrecke besteht aus einer Gruppe unterer Walzen 38 und einer Gruppe oberer Walzen 40, die in Transportrichtung aufeinanderfolgen, lose gelagert sind und durch Kontakt mit der über sie hinweggeführten Bahn angetrieben wird. Die Walzen sind von einem Gehäuse 42 umschlossen, das jede einzelne Walze auf der von der durchlaufenden Bahn abgewandten Seite haubenförmig umgreift. In das Gehäuse wird Kühlluft eingebracht, die durch diese Gehäuseausbildung in engem Kontakt mit den Kühlwalzen 38 und 40 geführt wird. Die die Kühlstrecke 36 durchlaufende Bahn wird sowohl durch die in das Gehäuse 42 eingebrachte Kühlluft, als auch durch den unmittelbaren Kontakt mit den von der Kühlluft gekühlten Walzen 38 und 40 gekühlt, wodurch eine sehr intensive Kühlwirkung erreicht wird.

Nach der Kühlung gelangt die Bahn in den Bereich der insgesamt mit 44 bezeichneten Schneidstation. In der Schneidstation werden die Inletts auf exakte Breite geschnitten, damit bei der weiteren Bearbeitung mit einer seitlichen Führung der laminierten Werkstücke gearbeitet werden kann.

Die Schneidstation enthält ein Schneidwalzenpaar bestehend aus einer fest gelagerten Schneidwalze 46 und einer in einem Schwenkarm 48 gelagerten und durch eine Feder 50 gegen die andere Schneidwalze andrückbaren Schneidwalze 52. Ein pneumatischer Zylinder 54 dient zur Betätigung eines Abhebenockens 56, durch welchen der Arm 48 verstellt und die Schneidwalzen 46 und 52 getrennt werden können.

Der Nocken 56 ist an einem Hebel 58 angeordnet, der über eine Stellstange 60 mit zwei weiteren, ebenfalls mit Nocken 62 bzw. 64 versehenen Hebeln 66 und 68 verbunden ist, die geeignet sind, zugleich mit der schwenkbaren Schneidwalze 52 die schwenkbaren Walzen 24 bzw. 32 der beiden Andrückwalzenpaare 22, 24 und 30, 32 abzuheben.

## Ansprüche

1. Verfahren zum Laminieren von blatt- oder kartenförmigen Inletts zwischen einer oberen und einer unteren Hüllfolie, bei welchem die Inletts ein Andrückwalzenpaar durchlaufen und eine obere und eine untere Hüllfolienbahn zwischen die Andrückwalzen, an diesen anliegend, eingeführt wird, *dadurch gekennzeichnet*, daß die aus den aneinander anliegenden und zwischen sich die Inletts einschließenden Hüllfolien gebildete Bahn nach dem Durchlaufen der Andrückwalzen eine Temperstrecke durchläuft, in welcher diese Bahn einer Wärmeeinwirkung ausgesetzt wird, daß die Bahn anschließend durch ein weiteres Andrückwalzenpaar und anschließend durch eine Kühlstrecke geführt wird, bevor in einer Schneidstation die laminierten Inletts aus der Bahn getrennt werden.

2. Vorrichtung zur Durchführung des Verfahrens nach Anspruch 1 mit einem ersten, beheizten Andrückwalzenpaar (22, 24), *dadurch gekennzeichnet*, daß in der Transportbahn des zu behandelnden Materials auf das erste Andrückwalzenpaar (22, 24) eine mit einer Heizeinrichtung (34) versehene Temperstrecke und auf diese ein zweites Andrückwalzenpaar (30, 32) folgt, und daß dem zweiten Andrückwalzenpaar (30, 32) eine Kühlstrecke (36) nachgeschaltet ist.

3. Vorrichtung nach Anspruch 2, *dadurch gekennzeichnet*, daß die Kühlstrecke (36) aus einem die Transportbahn umschließenden, mit einer Kühlluftzufuhr versehenen Gehäuse (42) besteht.

4. Vorrichtung nach Anspruch 3, *dadurch gekennzeichnet*, daß das Gehäuse (42) von der Kühlluft bestrichene Kühlwalzen (38, 40) enthält, die die Transportbahn tangieren.

5. Vorrichtung nach Anspruch 4, *dadurch gekennzeichnet*, daß die Kühlwalzen (38, 40) lose drehbar gelagert sind.

6. Vorrichtung nach einem der Ansprüche 4 oder 5, *dadurch gekennzeichnet*, daß die Kühlwalzen (38, 40) in zwei Gruppen beiderseits der Tranpsortbahn angeordnet sind.

7. Vorrichtung nach einem der Ansprüche 3 bis 6, *dadurch gekennzeichnet*, daß das Gehäuse 42) die Kühlwalzen (38, 40) auf der von der Transportbahn abgewandten Seite einzeln haubenartig umschließt.

8. Vorrichtung nach einem der Ansprüche 2 bis 7, *dadurch gekennzeichnet*, daß auf die Kühlstrecke (36) ein Schneidwalzenpaar (46, 52) folgt.

9. Vorrichtung nach einem der Ansprüche 2 bis 8, *dadurch gekennzeichent*, daß vor dem ersten Andrückwalzenpaar (22, 24) den zwischen dieses erste Andrückwalzenpaar (22, 24) einlaufenden Hüllfolienbahnen zugeordnete Vorwärmeinrichtungen angeordnet sind.

Fig.1

Fig.2